# FASCICULE DE BREVET EUROPEEN

(11) **EP 3 172 087 B1**
(45) Date de publication et mention de la délivrance du brevet: **20.02.2019**
(21) Numéro de dépôt: 14753280.8
(22) Date de dépôt: 24.07.2014
(51) Int. Cl.: B60R 19/18

(54) **DISPOSITIF DE VOIE BASSE POUR VÉHICULE AUTOMOBILE**
UNTERBEREICHVORRICHTUNG FÜR EIN FAHRZEUG
LOW AREA DEVICE FOR A MOTOR VEHICLE

(43) Date de publication de la demande: 31.05.2017
(73) Titulaire: Renault, 92100 Boulogne Billancourt (FR)
(72) Inventeur: VITRY, Bernard, 78730 Saint Arnoux (FR); ROLLET, Rémi, 91190 Gif (FR); LHOTTE, Julien, 78910 Behoust (FR); DUBREUIL, Bertrand, 92300 Levallois Perret (FR)
(86) Numéro de dépôt international: PCT/FR2014/051920
(87) Numéro de publication internationale: WO 2016/012661

(56) Documents cités:
- EP-A1- 2 241 480
- EP-A2- 1 036 715
- DE-A1-102010 052 510
- JP-A- 2010 083 453
- US-A- 3 564 688
- US-A1- 2007 252 397

## Description

L'invention concerne un dispositif de voie basse pour véhicule automobile.

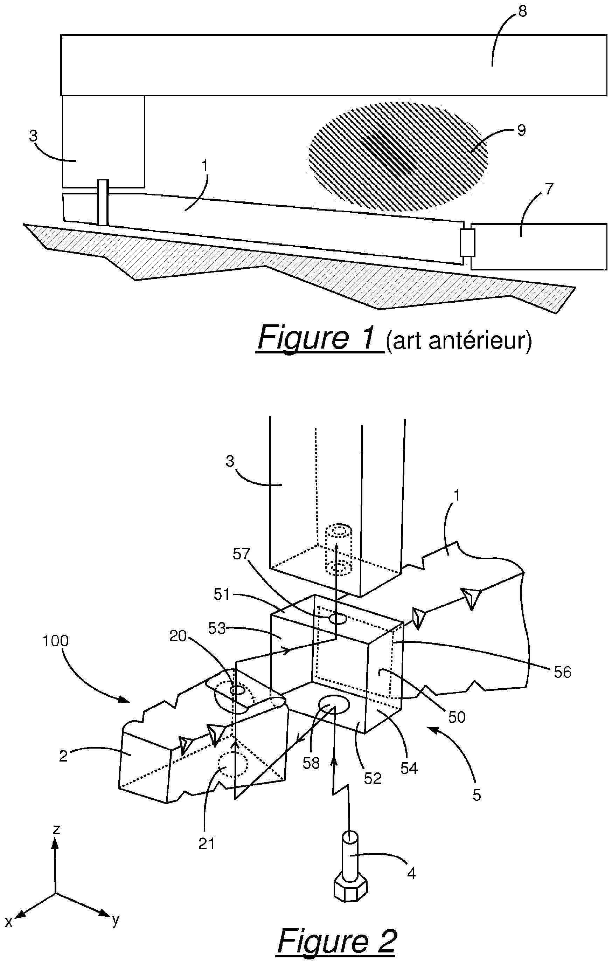

En référence à la figure 1, la partie avant d'un véhicule automobile comporte habituellement une voie haute et une voie basse.

La voie basse comprend un berceau 7, dont le rôle est de supporter une suspension avant, une prolonge 1 qui s'étend vers l'avant depuis le berceau 7, selon une direction horizontale ou proche de l'horizontale, et un élément avant d'absorption de choc (non représenté), également appelé « absorbeur » ou « crash box », rapporté à l'avant de la prolonge. La prolonge 1, que l'on appelle également « add-on », se présente par exemple sous la forme d'une poutre. La voie basse est soumise à des contraintes d'architecture et à des contraintes d'assemblage, du fait notamment de sa proximité, au-dessus, avec la boîte de vitesses 9 et, au-dessous, avec la garde au sol.

La voie haute comporte un élément de structure du véhicule, appelé longeron avant 8 de la caisse. Le longeron avant 8 comprend généralement une partie arrière (non représentée) qui s'étend à l'arrière du berceau 7 et une partie avant qui s'élève au-dessus du berceau 7 et de la prolonge 1 et s'étend parallèlement au berceau. Un autre élément d'absorption de choc (non représenté) est rapporté à l'avant du longeron avant.

Un élément de liaison vertical 3, couramment appelé « pendeloque » ou « pendard », relie la voie basse et la voie haute. Il est généralement monté entre la prolonge 1 et le longeron avant 8.

La prolonge 1 peut être fixée, d'une part, à la pendeloque 3, et, d'autre part, au berceau 7, par exemple par vissage ou boulonnage.

En cas de choc, notamment frontal, la partie avant du véhicule a pour rôle d'absorber et de dissiper tout ou partie de l'énergie engendrée par le choc, en se déformant, afin d'amortir le choc et d'éviter toute déformation de l'habitacle. Ce rôle est essentiel pour assurer la sécurité des passagers dans l'habitacle.

Au niveau de la voie basse, un choc frontal provoque généralement au moins une déformation de l'élément avant d'absorption. En cas de choc de forte intensité, la prolonge se déforme également, jouant ainsi également un rôle d'absorption. Du fait des contraintes d'architecture et d'assemblage, la voie basse présente généralement une faible section et une longueur importante. Il en résulte un comportement instable en cas de choc. Le document JP 2010 083 453 A décrit un dispositif de voie basse correspondant au préambule de la revendication 1.

La présente invention vient améliorer la situation.

A cet effet, l'invention concerne un dispositif de voie basse pour véhicule automobile comportant deux éléments d'absorption de choc, respectivement avant et arrière, caractérisé en ce qu'il comprend un boîtier intermédiaire, ouvert vers l'avant, emboîtant partiellement l'élément d'absorption avant et comportant un fond arrière assemblé à l'élément d'absorption arrière, ledit boîtier étant adapté pour constituer un logement de réception de l'élément d'absorption avant sous forme comprimée.

En cas de choc frontal contre une surface d'impact d'un véhicule intégrant le dispositif de voie basse de l'invention, dans un premier temps, l'élément d'absorption avant se comprime, s'écrase et vient se loger, sous forme comprimée, à l'intérieur du boîtier intermédiaire, éventuellement jusqu'à ce que celui-ci arrive en butée contre la surface d'impact. Dans un deuxième temps, après la mise en butée du boîtier et en cas de choc de forte intensité, l'élément d'absorption arrière se comprime à son tour en s'écrasant contre le fond du boîtier. Grâce à cela, la stabilité de la voie basse en cas de choc est améliorée.

Avantageusement, le fond du boîtier est plan et s'étend transversalement par rapport à une direction longitudinale du dispositif de voie basse. Le fond du boîtier constitue en définitive un mur d'appui et d'écrasement, contre lequel l'élément d'absorption avant et l'élément d'absorption arrière viennent s'écraser.

Avantageusement encore, l'élément d'absorption avant et l'élément d'absorption arrière sont coaxiaux. La disposition coaxiale des deux éléments d'absorption contribue à améliorer la stabilité du dispositif de voie basse en cas de choc, notamment frontal.

Dans un mode de réalisation particulier, le boîtier intermédiaire est dimensionné de manière à loger intégralement l'élément d'absorption avant sous forme comprimée.

Dans ce cas et avantageusement, le boîtier intermédiaire est dimensionné de manière à assurer un taux de compression longitudinale prédéfini de l'élément d'absorption lorsque le boîtier arrive en butée contre une surface d'impact.

Ainsi, en fin de compression de l'élément d'absorption avant, le boîtier vient en butée contre une surface d'impact. Le fond du boîtier devient alors un mur d'appui stable contre lequel l'élément d'absorption arrière s'écrase ensuite. En adaptant les dimensions du boîtier, notamment sa dimension selon la direction longitudinale, on peut prévoir le taux de compression

Dans une forme de réalisation particulière, le boîtier intermédiaire comprend des moyens de fixation à un élément de liaison entre voie haute et voie basse. Grâce à cela, la stabilité de la liaison entre voie basse et voie haute est améliorée.

Avantageusement, l'élément d'absorption avant et le boîtier comprennent chacun une ouverture supérieure et une ouverture inférieure, lesdites ouvertures étant adaptées pour se positionner au droit les unes des autres et pour former un passage de réception d'une vis de fixation à l'élément de liaison entre voie haute et voie basse.

Dans une variante de réalisation, le boîtier présente une section transversale rectangulaire.

L'élément d'absorption arrière peut être une prolonge de berceau.

L'invention concerne aussi un ensemble de voie basse pour véhicule automobile comportant deux dispositifs homologues de voie basse tels que définis ci-dessus.

L'invention concerne encore un véhicule automobile intégrant un tel ensemble de voie basse.

L'invention sera mieux comprise à l'aide de la description suivante de différentes formes de réalisation du dispositif de voie basse selon l'invention, en référence aux dessins annexés sur lesquels :
- La figure 2 représente une vue schématique éclatée, en perspective 3D, d'un dispositif de voie basse selon l'invention ;
- Les figures 3A, 3B et 3C représentent une vue schématique latérale du dispositif de la figure 2, respectivement avant un choc, à un instant intermédiaire durant un choc de forte intensité, et en fin de choc de forte intensité ;
- La figure 4 représente une voie haute et la voie basse de la figure 2.

Par souci de clarté, les éléments analogues ou correspondants représentés sur les différentes figures portent les mêmes références.

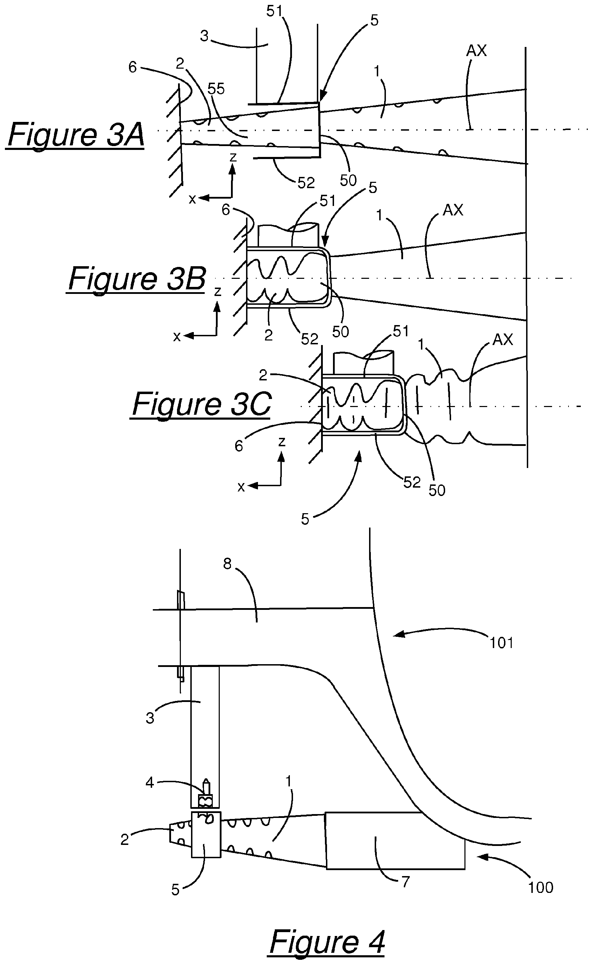

Un repère tridimensionnel orthogonal est également représenté sur les figures 2 et 3. L'axe z correspond à la verticale et les axes x, y définissent un plan horizontal. Par définition, les termes « avant » et « arrière » font référence au sens de déplacement en marche avant du véhicule. Le terme « longitudinal » correspond au sens de la longueur du véhicule, autrement dit d'un axe médian traversant le véhicule, en passant par l'avant et l'arrière de celui-ci, et parallèle (ou sensiblement parallèle) à la surface sur laquelle le véhicule se trouve. Sur les différentes figures, le dispositif de voie basse est représenté dans la position qu'il aurait après intégration dans un véhicule placé sur une surface horizontale.

Sur la figure 2, on a représenté une forme de réalisation particulière du dispositif de voie basse pour véhicule automobile, destiné à être monté sur la partie avant du véhicule, d'un côté de celui-ci. La partie avant du véhicule comprend deux dispositifs de voie basse analogues respectivement situés des deux côtés, droite et gauche, du véhicule. En référence à la figure 4, la voie basse 100 est reliée à une voie haute 101, l'ensemble formant une voie avant.

Le dispositif de voie basse 100 comprend, de façon connue, un élément arrière d'absorption de choc, constitué par une prolonge 1, et un élément avant d'absorption de choc 2. Il s'étend globalement le long d'un axe longitudinal AX représenté sur les figures 3A-3C.

La prolonge 1, également appelée « add-on », est un corps creux, ayant la forme d'une poutre, apte à se déformer en cas de choc, plus particulièrement en cas de choc de grande intensité. Elle s'étend longitudinalement (c'est-à-dire dans le sens de la longueur du véhicule), selon une direction horizontale ou proche de l'horizontale, vers l'avant depuis un berceau 7 (représenté sur la figure 4) de support d'une suspension avant. La prolonge 1 peut être assemblée, à l'arrière, au berceau 7. La section transversale de la prolonge 1 (c'est-à-dire dans un plan perpendiculaire à l'axe AX) est ici rectangulaire. Dans l'exemple particulier de réalisation représenté sur la figure 2, la section transversale de la prolonge 1 diminue légèrement de façon continue vers l'avant. Cette section est ajustée pour pouvoir être contenue dans un boitier 5 après pliage de la crash box, décrit ci-après.

L'élément d'absorption avant 2, également appelé « absorbeur » ou « crash box », est rapporté à l'avant du dispositif de voie basse 100. Il s'agit d'un corps creux, de section transversale ici rectangulaire, apte à se déformer en cas de choc, de faible ou de forte intensité. La section transversale de l'élément d'absorption (c'est-à-dire dans un plan perpendiculaire à l'axe AX) est ici rectangulaire. Dans l'exemple particulier de réalisation représenté sur la figure 2, la section transversale de l'élément d'absorption 2 diminue légèrement de façon continue vers l'avant.

Le dispositif de voie basse 100 comporte également un boîtier intermédiaire 5. Le boîtier 5 a ici une forme de parallélépipède, ouvert vers l'avant. Il comprend un fond 50, quatre parois - dont une supérieure 51, une inférieure 52 et deux latérales 53-54 - et une ouverture avant 55 (figure 3A), au droit du fond 50. Le fond 50 s'étend dans un plan transversal (c'est-à-dire perpendiculaire à l'axe longitudinal AX). Les parois, supérieure 51 et inférieure 52, sont horizontales et les parois latérales 53, 54 sont verticales.

L'élément d'absorption avant 2 est partiellement emboîté, à l'arrière, dans le boîtier 5, au travers de l'ouverture avant 55. Les bords de l'extrémité arrière de l'élément 2 sont en appui contre la surface avant du fond 50.

La prolonge 1 est assemblée, à l'avant, au boîtier 5. Les bords de l'extrémité avant de la prolonge 1 sont ici soudés à la surface arrière du fond 50 du boîtier 5. Les traits en pointillés 56 représentent les cordons de soudure. On pourrait toutefois envisager un autre moyen d'assemblage.

L'élément d'absorption avant 2 comporte deux ouvertures, l'une supérieure 20 et l'autre inférieure 21, de réception d'une vis de fixation 4. De même, la paroi supérieure 51 et la paroi inférieure 52 comportent chacune une ouverture 57, 58 de réception de la vis de fixation 4. Lorsque l'élément 2 est partiellement emboîté dans le boîtier 5 et en appui contre le fond 50, les ouvertures de l'élément 2 et du boîtier 5 sont positionnées au droit les unes des autres de manière à ménager un passage pour la vis 4.

Le boîtier 5 est réalisé dans un matériau présentant une épaisseur suffisante pour assurer l'équerrage entre la fixation sous une pendeloque 3, décrite ci-après, et l'élément d'absorption avant 2 et présentant une résistance suffisante pour ne pas se déformer (par exemple, un matériau en acier THLE de très haute limite élastique > 300MPa peut être utilisé), en particulier par compression selon la direction longitudinale, en cas de choc, notamment de choc frontal, de faible ou forte intensité.

Par « choc de faible intensité », respectivement « choc de forte intensité », on entend désigner un choc se produisant lorsque le véhicule se déplace à une vitesse inférieure, respectivement supérieure, à une vitesse limite, par exemple égale à 16km/h.

Un élément de liaison 3, appelé « pendard » ou « pendeloque », relie verticalement (ou selon une direction proche de la verticale) la voie basse 100 et la voie haute 101. Il présente une forme allongée selon la direction verticale z (ou selon une direction proche de la verticale). L'élément de liaison 3 est fixé par la vis 4, d'axe vertical selon z, au boîtier 5 et à l'élément avant d'absorption 2. La vis 4 traverse verticalement le boîtier 5, l'élément d'absorption avant 2 et la paroi inférieure de l'élément de liaison 3.

De façon connue, le dispositif de voie haute 101, représenté sur la figure 4, comprend un longeron avant de caisse de véhicule, dont une partie avant 8 surplombe la voie basse 100. La partie avant 8 du longeron avant est un corps creux en forme de poutre, qui s'étend longitudinalement et parallèlement au berceau 7.

Sur les figures 3A, 3B et 3C, afin d'illustrer le comportement du dispositif de voie basse en cas de choc frontal, on a représenté le dispositif de voie basse du véhicule avant le choc, pendant le choc et en fin de choc. Par souci de clarté, la vis 4 n'est pas représentée.

Considérons, par exemple, un choc frontal de grande intensité, contre une surface d'impact telle qu'un mur vertical 6, d'un véhicule intégrant le dispositif de voie basse représenté sur la figure 2, le véhicule roulant à une vitesse supérieure à 16km/h.

Initialement, l'élément avant d'absorption 2 et la prolonge 1 ne sont pas comprimés et sont en appui contre le fond 50 du boîtier 5, respectivement à l'avant et à l'arrière, comme représenté sur la figure 3A.

Durant le choc, dans un premier temps, l'élément avant d'absorption 2, pris en sandwich entre le mur 6 et le fond de boîtier 50, se comprime longitudinalement, s'écrase et vient s'encastrer dans le boîtier 5, jusqu'à ce que l'avant du boîtier 5 vienne en butée contre le mur 6, comme représenté sur la figure 3B.

Le boîtier 5 est dimensionné de manière à pouvoir loger intégralement l'élément d'absorption avant 2 sous forme comprimée. Il peut également être dimensionné de manière pour assurer un taux de compression longitudinale prédéfini de l'élément d'absorption 2 lorsque le boîtier 5 arrive en butée contre la surface d'impact du mur 6. Ce taux de compression prédéfini peut par exemple correspondre à une compression longitudinale maximale de l'élément 2.

Dans un deuxième temps, après mise en butée du boîtier 5 contre le mur 6, la prolonge 1 se comprime longitudinalement, en s'écrasant à l'avant contre le fond 50 du boîtier 5, comme représenté sur la figure 3C.

Durant le compactage de l'élément d'absorption 2 puis celui de la prolonge 1, le boîtier 5 ne se déforme pas. Le fond 50 joue le rôle d'un mur plan d'appui et d'écrasement, dont la forme demeure stable sous l'action des efforts engendrés par le choc. De même, durant le choc, les parois latérales du boîtier 5 conservent leur forme, ce qui contribue à assurer un comportement stable de la voie basse pendant le choc. La position relative, coaxiale, de l'élément d'absorption avant 2 et de la prolonge 1, contribue également à obtenir un comportement stable de la voie basse pendant la compression de l'élément d'absorption 2 et de la prolonge 1.

Entre outre, l'assemblage de la pendeloque 3 et de la voie basse 100 au niveau du boîtier 5, qui demeure incompressible en cas de choc, assure une stabilité de la liaison entre voie basse 100 et voie haute 101.

Grâce au boîtier intermédiaire 5, qui assure une liaison coaxiale entre l'élément d'absorption avant 2 et la prolonge 1, est incompressible en cas de choc et joue un rôle d'appui plan et de support d'écrasement pour l'élément d'absorption avant 2 et la prolonge 1, le comportement de la voie basse en cas de choc est amélioré. Le boîtier 5 permet une transmission des efforts produits par le choc de l'avant vers l'arrière, une coordination des compressions respectives de l'élément d'absorption 2 puis de la prolonge 1 ainsi qu'une compression optimale de l'élément d'absorption avant 2 et de la prolonge 1.

Le mur 6 fixe la limite fictive d'écrasement de l'ensemble voie haute / voie basse pour le petit choc (v<16km/h). Par conséquent, la paroi formant le fond 50 du boitier 5 est placée de manière cohérente pour contenir toute la crash box en fin de compressibilité pour ce même choc, sans déformation du longeron add-on 1 ni d'un longeron de voie haute de caisse. En grand choc (v>16km/h), la voie haute et la voie basse continueront de se compacter en parallèle. La pendeloque 3 est alors animée d'un mouvement sensiblement rectiligne horizontal qui permet de maintenir la paroi du fond 50 verticale, et l'aide ainsi à apporter la stabilisation attendue.

## Revendications

1. Dispositif de voie basse pour véhicule automobile comportant deux éléments d'absorption de choc, respectivement avant (2) et arrière, **caractérisé en ce qu'**il comprend un boîtier (5) intermédiaire, ouvert vers l'avant, emboîtant partiellement l'élément d'absorption avant et comportant un fond arrière assemblé à l'élément d'absorption arrière, ledit boîtier (5) étant adapté pour constituer un logement de réception de l'élément d'absorption avant (2) sous forme comprimée.

2. Dispositif selon la revendication précédente, **caractérisé en ce que** le fond (50) du boîtier (5) est plan et s'étend transversalement par rapport à une direction longitudinale du dispositif de voie basse.

3. Dispositif selon l'une des revendications précédentes, **caractérisé en ce que** l'élément d'absorption avant (2) et l'élément d'absorption arrière sont coaxiaux.

4. Dispositif selon l'une des revendications précédentes, **caractérisé en ce que** le boîtier (5) intermédiaire est dimensionné de manière à loger intégralement l'élément d'absorption avant (2) sous forme comprimée.

5. Dispositif selon la revendication précédente, **caractérisé en ce que** le boîtier (5) intermédiaire est dimensionné de manière à assurer un taux de compression longitudinale prédéfini de l'élément d'absorption (2) lorsque le boîtier (5) arrive en butée contre une surface d'impact.

6. Dispositif selon l'une des revendications précédentes, **caractérisé en ce que** le boîtier intermédiaire (5) comprend des moyens de fixation à un élément de liaison entre voie haute et voie basse.

7. Dispositif selon la revendication précédente, **caractérisé en ce que** l'élément d'absorption avant (2) et le boîtier (5) comprennent chacun une ouverture supérieure (20 ; 57) et une ouverture inférieure (21 ; 58), lesdites ouvertures étant adaptées pour se positionner au droit les unes des autres et pour former un passage de réception d'une vis de fixation (4) à l'élément de liaison entre voie haute et voie basse.

8. Dispositif selon l'une des revendications précédentes, **caractérisé en ce que** le boîtier (5) présente une section transversale rectangulaire.

9. Dispositif selon l'une des revendications précédentes, **caractérisé en ce que** l'élément d'absorption arrière est une prolonge (1) de berceau.

10. Dispositif selon l'une des revendications précédentes, **caractérisé en ce que** le boitier a une forme de parallélépipède, et **en ce qu'**il comprend un fond (50), quatre parois dont une supérieure (51), une inférieures (52) et deux latérales (53,54) et comprenant une ouverture avant (55) au droit du fond (50).

11. Ensemble de voie basse pour véhicule automobile, **caractérisé en ce qu'**il comprend deux dispositifs de voie basse selon l'une des revendications précédentes.

12. Véhicule automobile intégrant un ensemble de voie basse selon la revendication 11.

## Patentansprüche

1. Unterbau-Vorrichtung für ein Kraftfahrzeug, die zwei Stoßabsorptionselemente, ein vorderes (2) bzw. ein hinteres, aufweist, **dadurch gekennzeichnet, dass** sie einen nach vorne offenen Zwischenbehälter (5) enthält, in den das vordere Absorptionselement teilweise eingesteckt ist und der einen hinteren Boden aufweist, der an das hintere Absorptionselement montiert ist, wobei der Behälter (5) geeignet ist, einen Aufnahmesitz des vorderen Absorptionselements (2) in komprimierter Form zu bilden.

2. Vorrichtung nach dem vorhergehenden Anspruch, **dadurch gekennzeichnet, dass** der Boden (50) des Behälters (5) eben ist und sich bezüglich einer Längsrichtung der Unterbau-Vorrichtung quer erstreckt.

3. Vorrichtung nach einem der vorhergehenden Ansprüche, **dadurch gekennzeichnet, dass** das vordere Absorptionselement (2) und das hintere Absorptionselement koaxial sind.

4. Vorrichtung nach einem der vorhergehenden Ansprüche, **dadurch gekennzeichnet, dass** der Zwischenbehälter (5) so bemessen ist, dass er das vordere Absorptionselement (2) in komprimierter Form vollständig aufnimmt.

5. Vorrichtung nach dem vorhergehenden Anspruch, **dadurch gekennzeichnet, dass** der Zwischenbehälter (5) so bemessen ist, dass er einen vordefinierten Längskompressionsgrad des Absorptionselements (2) gewährleistet, wenn der Behälter (5) gegen eine Aufprallfläche in Anschlag kommt.

6. Vorrichtung nach einem der vorhergehenden Ansprüche, **dadurch gekennzeichnet, dass** der Zwischenbehälter (5) Befestigungseinrichtungen an einem Verbindungselement zwischen Oberbau und Unterbau enthält.

7. Vorrichtung nach dem vorhergehenden Anspruch, **dadurch gekennzeichnet, dass** das vordere Absorptionselement (2) und der Behälter (5) je eine obere Öffnung (20; 57) und eine untere Öffnung (21; 58) enthalten, wobei die Öffnungen geeignet sind, sich voreinander zu positionieren und einen Aufnahmedurchgang für eine Befestigungsschraube (4) am Verbindungselement zwischen Oberbau und Unterbau zu bilden.

8. Vorrichtung nach einem der vorhergehenden Ansprüche, **dadurch gekennzeichnet, dass** der Behälter (5) einen rechtwinkligen Querschnitt aufweist.

9. Vorrichtung nach einem der vorhergehenden Ansprüche, **dadurch gekennzeichnet, dass** das hintere Absorptionselement eine Aufhängungsverlängerung (1) ist.

10. Vorrichtung nach einem der vorhergehenden Ansprüche, **dadurch gekennzeichnet, dass** das Gehäuse eine parallelepipedische Form hat, und dass es einen Boden (50), vier Wände, davon eine obere (51), eine untere (52) und zwei seitliche (53, 54) enthält, und eine vordere Öffnung (55) gegenüber dem Boden (50) enthält.

11. Unterbaueinheit für ein Kraftfahrzeug, **dadurch gekennzeichnet, dass** sie zwei Unterbau-Vorrichtungen nach einem der vorhergehenden Ansprüche enthält.

12. Kraftfahrzeug, das eine Unterbaueinheit nach Anspruch 11 aufweist.

## Claims

1. Lower structure device for a motor vehicle comprising two shock absorbing elements, front (2) and rear respectively, **characterized in that** it comprises an intermediate housing (5), open to the front, partially enclosing the front absorbing element and comprising a rear end assembled on the rear absorbing element, said housing (5) being suitable for forming a recess for receiving the front absorbing element (2) in compressed form.

2. Device according to the previous claim, **characterized in that** the end (50) of the housing (5) is flat and extends transversely relative to a longitudinal direction of the lower structure device.

3. Device according to one of the previous claims, **characterized in that** the front absorbing element (2) and the rear absorbing element are coaxial.

4. Device according to one of the previous claims, **characterized in that** the intermediate housing (5) is sized so as to accommodate the entire front absorbing element (2) in compressed form.

5. Device according to the previous claim, **characterized in that** the intermediate housing (5) is sized so as to ensure a predefined longitudinal compression rate of the absorbing element (2) when the housing (5) abuts against an impact surface.

6. Device according to one of the previous claims, **characterized in that** the intermediate housing (5) comprises means for fastening to a connecting element between the upper structure and the lower structure.

7. Device according to the previous claim, **characterized in that** the front absorbing element (2) and the housing (5) each comprise a top opening (20; 57) and a bottom opening (21; 58), said openings being suitable for being positioned in line with each other and for forming a passage for receiving a screw (4) for fastening to the connecting element between the upper structure and the lower structure.

8. Device according to one of the previous claims, **characterized in that** the housing (5) has a rectangular cross-section.

9. Device according to one of the previous claims, **characterized in that** the rear absorbing element is a cradle extension (1).

10. Device according to one of the previous claims, **characterized in that** the housing has a parallelepipedal shape, and **in that** it comprises an end (50), four walls including a top wall (51), a bottom wall (52) and two side walls (53, 54), and a front opening (55) in line with the end (50) .

11. Lower structure assembly for a motor vehicle, **characterized in that** it comprises two lower structure devices according to one of the previous claims.

12. Motor vehicle incorporating a lower structure assembly according to Claim 11.
